# EUROPÄISCHE PATENTANMELDUNG

(11) **EP 1 892 676 A1**
(43) Veröffentlichungstag der Anmeldung: **27.02.2008**
(21) Anmeldenummer: 06016587.5
(22) Anmeldetag: 08.08.2006
(51) Int. Cl.: G07C 9/02, G06K 7/08, H01Q 1/52

(54) **Zugangskontrollsystem**

(71) Anmelder: SkiData AG, 5083 Gartenau (AT)
(72) Erfinder: Ponert, Gregor, 5020 Salzburg (AT); Golser, Rudolf, 5400 Hallein (AT)
(74) Vertreter: Haft, von Puttkamer, Berngruber

(57) **Zusammenfassung**

Ein Zugangskontrollsystem weist wenigstens zwei an einer Zugangsspur (4) hintereinander angeordnete, an eine Leseeinrichtung (20) angeschlossene Antennenspulen (12, 13 und 14, 15) auf, die mit einer Kapazität (40, 41) einen Schwingkreis (30, 31) bilden. Dabei wird entweder der eine Schwingkreis (30, 31) mit der in Zugangsrichtung (5) ersten Antennenspule (12, 13) oder der andere Schwingkreis mit der zweiten Antennenspule (14, 15) von der Leseeinrichtung (20) angesteuert, um von einem von einem Benutzer getragenen Transponder (22), der eine mit den Antennenspulen (12 bis 15) koppelbare Transponderspule (24) aufweist, Daten für eine Zugangsberechtigung auszulesen. Der von der Leseeinrichtung (20) nicht angesteuerte Schwingkreis (30, 31) wird verstimmt oder kurzgeschlossen.

## Beschreibung

Die Erfindung bezieht sich auf ein Zugangskontrollsystem nach dem Oberbegriff des Anspruchs 1.

Eine derartige Vorrichtung ist aus DE 10 2004 013 965 B3 bekannt. Dabei gibt ein Drehkreuz oder dergleichen Sperrelement in seiner Grundstellung den Zugang frei, so dass nur bei ungültiger Lesung einer Zugangsberechtigung und gleichzeitiger Detektion einer Person mit einem Personensensor der Zugang blockiert wird. Damit das Sperrelement seine Blockierstellung einnehmen kann, bevor die detektierte Person ohne gültige Zugangsberechtigung das Sperrelement erreicht, ist eine erste Antennenspule mit größerem Abstand von dem Sperrelement und eine zweite Antennenspule mit geringerem Abstand zumindest an einer Seite der Zugangsspur vorgesehen. Dadurch wird verhindert, dass eine Person das Sperrelement nicht passieren kann, die ohne gültige Zugangsberechtigung vor dem Sperrelement wartet, bis der Zugang durch eine zweite nachfolgende Person mit gültiger Zugangsberechtigung freigegeben wird.

Der Abstand der an einer Seite der Zugangsspur hintereinander angeordneten Antennenspulen ist jedoch gering. Dies hat eine induktive Kopplung der Antennenspulen und damit gegenseitige Störungen zur Folge, die das Auslesen eines Transponders unmöglich machen kann.

Aufgabe der Erfindung ist es daher, diese Störungen auf einfache Weise zu beseitigen.

Dies wird erfindungsgemäß mit dem im Anspruch 1 gekennzeichneten Zugangskontrollsystem erreicht. In den Unteransprüchen sind vorteilhafte Ausgestaltungen der Erfindung wiedergegeben.

D.h., nach der Erfindung kann jeder Schwingkreis verstimmt oder kurzgeschlossen werden. Damit können sich zwei Antennenspulen, die an einer Seite der Zugangsspur in einem kurzen Abstand in Zugangsrichtung hintereinander angeordnet sind, nicht beeinflussen, wenn die eine Antennenspule von der Leseeinrichtung zum Auslesen der Daten von dem Transponder angesteuert wird, und die andere Antennenspule nicht.

Die Erfindung ist insbesondere für eine Zugangskontrollvorrichtung nach DE 10 2004 013 965 B3 bestimmt. D.h., für eine Zugangskontrollvorrichtung, bei der in der Zugangsspur ein Sperrsystem vorgesehen ist, das in seiner "Open Gate"-Grundstellung den Zugang freigibt und ihn nur bei ungültiger Lesung einer Zugangsberechtigung sowie Detektion einer Person mit einem Personensensor blockiert. Dabei wird das Sperrsystem in Abhängigkeit einer gültigen oder ungültigen Lesung einer Zugangsberechtigung entweder mit der ersten oder der zweiten der beiden hintereinander angeordneten Antennenspulen von der Leseeinrichtung betätigt. Das Sperrsystem kann z.B. eine Ampel aufweisen, die beim Sperren auf Rot und bei Freigabe auf Grün schaltet, oder ein Drehkreuz oder dergleichen Sperrelement.

Dabei ist vorzugsweise der ersten und der zweiten Antennenspule auf der einen Seite der Zugangsspur eine Antennenspule auf der anderen Seite der Zugangsspur zugeordnet. Die einander gegenüberliegenden Antennenspulen bilden ein Antennenspulenpaar. Um die Lesezuverlässigkeit zu erhöhen, wird das betreffende Antennenspulenpaar, also entweder das in Zugangsrichtung erste oder das zweite Antennenspulenpaar gleichzeitig, jedoch abwechselnd in einem gleichphasigem oder in einem gegenphasigen Betriebsmodus von der Leseeinrichtung angesteuert.

Mit jeder Antennenspule wird ein hochfrequentes Feld erzeugt, welches das Innere der Transponderspule durchsetzt. Die Frequenz kann z.B. weniger als 135 kHz oder 13,56 MHz betragen. Durch Induktion wird damit an der Transponderspule eine Spannung erzeugt, auf der einerseits die Energieversorgung des Datenträgers (Mikrochip) des Transponders und andererseits die Datenübertragung zwischen der Leseeinrichtung und dem Transponder beruht.

Wenn die beiden Antennenspulen des betreffenden Paares von der Leseeinrichtung gleichphasig angesteuert werden, führt die Superposition der Einzelfelder der beiden Antennenspulen zu Feldlinien, die sich quer über die Zugangsspur erstrecken. Ein Transponder, der sich mit seiner Spulenfläche in Zugangsrichtung, also parallel zu den Antennenspulen erstreckt, wird damit im Inneren der Transponderspule von der maximalen Anzahl von Feldlinien durchsetzt, so dass die Lesezuverlässigkeit ihr Maximum erreicht.

Im Gegensatz zum gleichphasigen Betriebsmodus führt die Superposition der Einzelfelder der beiden Antennenspulen im gegenphasigen Betriebsmodus zu Feldlinien, die insbesondere in der Mitte der Zugangsspur zwischen den beiden Antennenspulen längs der Zugangsspur verlaufen. D.h., wenn die Spulenfläche der Transponderspule quer zur Zugangsrichtung angeordnet ist, wird das Innere der Transponderspule von der maximalen Anzahl von Feldlinien durchsetzt und damit die maximale Lesezuverlässigkeit erreicht.

Der Betriebsmodus, bei dem ein Transponder in der Zugangsspur detektiert wird, wird dann so lange aufrechterhalten, bis die Lesetransaktion abgeschlossen ist.

Durch dass Verstimmen oder Kurzschließen der hintereinander angeordneten Antennenspulen oder Antennenspulenpaare nach der Erfindung wird erreicht, dass die nichtaktiven, also von der Leseeinrichtung nicht zum Datentausch angesteuerten Antennen auf den durch die gerade aktiven Antennen hervorgerufenen Feldverlauf keinen Einfluss haben.

Zum Verstimmen oder Kurzschließen des jeweiligen Schwingkreises, der von der Leseeinrichtung nicht zum Auslesen von Daten aus dem Transponder angesteuert wird, ist jeder Schwingkreis mit einer Verstimm- oder Kurzschlusselektronik versehen. Dazu weist jede Verstimm- oder Kurzschlusselektronik wenigstens einen Schalter, vorzugsweise einen Diodenschalter auf, wobei eine Niedervolt-Gleichspannung, also eine Gleichspannung von weniger als 42 V, insbesondere etwa 5 V, zur Stromversorgung des Diodenschalters verwendet wird. Diese Schaltspannung wird auch für das Schaltsignal verwendet.

Damit kann das Hochfrequenzkabel, das die Leseeinrichtung mit dem Schwingkreis mit der betreffenden Antennenspule verbindet, zugleich zur Stromversorgung und zur Übertragung der Schaltsignale verwendet werden. Zur Ansteuerung der Verstimm- oder Kurzschlusselektronik brauchen damit keine zusätzlichen Kabel verlegt zu werden, was einen erheblichen Vorteil darstellt, insbesondere wenn ein vorderes und ein hinteres Antennenspulenpaar verwendet wird, also vier Schwingkreise vorhanden sind, die verstimmt bzw. kurzgeschlossen werden müssen.

Wenn zwei oder mehr Zugangssperren vorgesehen sind, werden die Zugangssperren vorzugsweise parallel oder asynchron betrieben. Ein Multiplexer zwischen den Sperren ist damit nicht mehr notwendig, was eine erhebliche Zeitersparnis bedeutet.

Das erfindungsgemäße Zugangskontrollsystem ist beispielsweise für Skilifte und dergleichen Transportsysteme geeignet. Selbstverständlich ist es auch für andere Verwendungszwecke einsetzbar, beispielsweise für Gebäude, Stadien, Schwimmbäder und dergleichen Einrichtungen.

Nachstehend ist die Erfindung anhand der beigefügten Zeichnung beispielhaft näher erläutert. Darin zeigen:
- Figur 1: eine perspektivische Ansicht einer Zugangsspur mit einer Zugangskontrollvorrichtung für den "Open Gate"-Betrieb, wobei die eine Antennenspule des der Drehsperre benachbarten Antennespulenpaares weggelassen ist;
- Figur 2: eine schematische Draufsicht auf die Zugangsspur nach Figur 1, wobei die Drehsperre weggelassen ist;
- Figur 3 und 4: zwei geschnitten dargestellte, gegenüberliegende Antennenspulen der Vorrichtung nach Figur 1 und 2 mit dem Feldlinienverlauf bei gleichphasigem bzw. gegenphasigem Betriebsmodus;
- Figur 5: eine Draufsicht auf eine Transponderspule; und

- Figur 6: eine Ausführungsform einer Schaltungsanordnung für das erfindungsgemäße Zugangskontrollsystem.

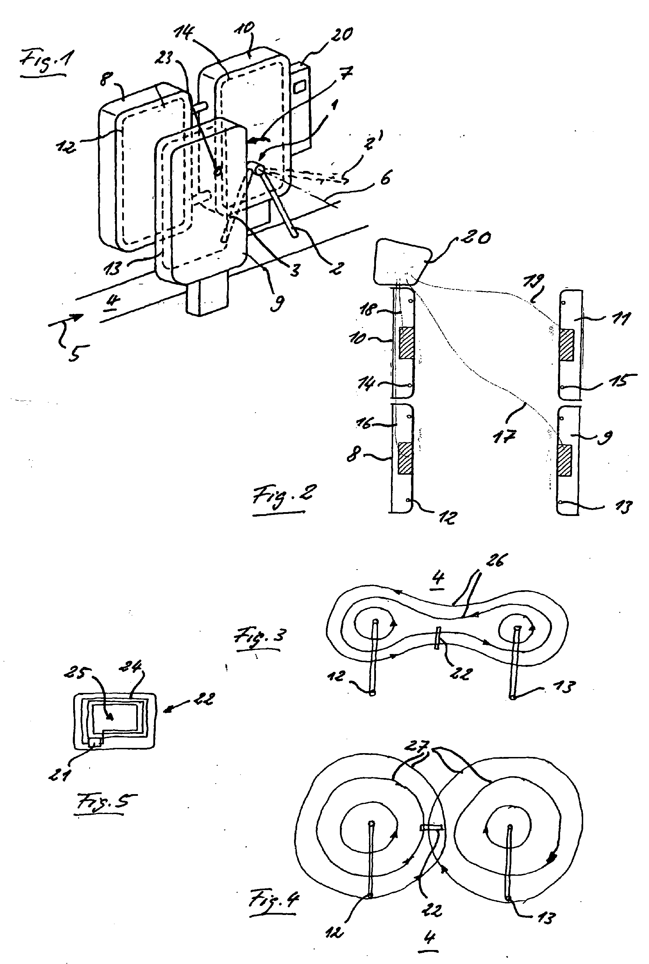

Gemäß Figur 1 weist die Zugangskontrollvorrichtung einen Drehstern mit zwei Sperrarmen 2, 3 als Sperrelement 1 zum Sperren der Zugangsspur 4 auf, die in Richtung des Pfeils 5 passiert wird. Das Sperrelement 1 ist um eine gegenüber der Waagerechten geneigte Achse 6 drehbar. Beide Sperrarme 2, 3 schließen mit der Drehachse 6 einen Winkel von ca. 45 und miteinander einen Winkel von ca. 120 ein. In Figur 1 sind die Sperrarme 2, 3 in der "Open Gate"-Grundstellung dargestellt, in der sie den Zugang 4 freigeben. Durch Drehung des Sperrelements 1 entsprechend dem Pfeil 7 wird der Sperrarm 2 nach oben in die in Figur 1 gestrichelt dargestellte Position 2' geschwenkt und damit der Zugang 5 blockiert. Statt der zwei Sperrarme 2, 3 kann auch ein einziger Sperrarm vorgesehen sein, der mit der Drehachse 6 einen Winkel von ca. 45° einschließt und in die Sperrposition 2' drehbar ist. Dieser Sperrarm kann stets in Durchgangsrichtung (Sperren - Freigeben) drehbar sein oder in beiden Richtungen bewegt werden.

Gemäß Figur 1 und 2 ist in einem Gehäuse 8, 9, 10, 11 jeweils eine Antennenspule 12, 13, 14 bzw. 15 angeordnet. Die Antennenspule 12 und 13, die auf gegenüberliegenden Seiten der Zugangsspur 4 angeordnet sind, bilden ein erstes Antennenspulenpaar, und die Antennenspulen 14 und 15 ein zweites Antennenspulenpaar. Die Antennenspulen 12 bis 15 sind über ein HF-Kabel 16, 17, 18, 19 an eine gemeinsame Leseeinrichtung 20 angeschlossen (Figur 2). Jedoch kann auch für jedes Antennenspulenpaar 12 und 13 bzw. 14 und 15 jeweils eine eigene Leseeinrichtung vorgesehen sein.

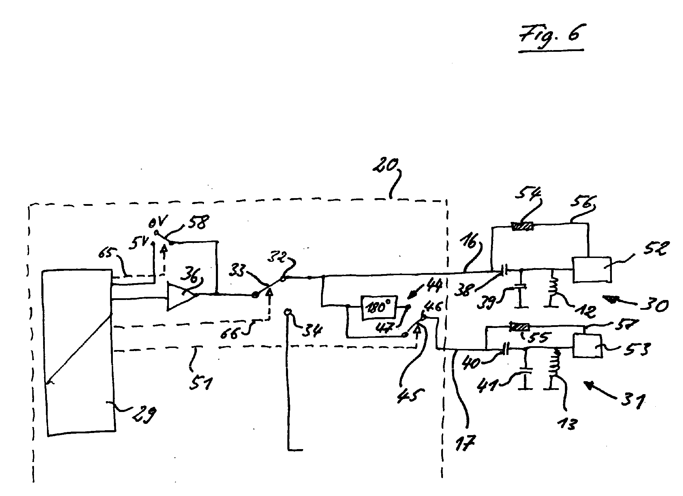

Die Leseeinrichtung 20 steuert das Sperrelement 1 an. Mit dem in Zugangsrichtung 5 ersten Antennenspulenpaar 12, 13 wird die Zugangsberechtigung ausgelesen, die in einem Mikrochip 21 des Transponders 22 abgelegt ist (Figur 5), der von dem Benutzer getragen wird, der den Zugang 4 passiert.

Wenn mit dem ersten Antennenspulenpaar 12, 13 eine gültige Zugangsberechtigung ausgelesen wird, bleibt das Sperrelement 1 in der Freigabeposition, d.h. die Sperrarme 2 und 3 weisen neben der Zugangsspur 4 nach unten. Passiert hingegen eine Person ohne gültige Lesung einer Zugangsberechtigung das erste Antennenspulenpaar 12, 13 und zugleich einen Personensensor 23, z.B. eine Lichtschranke, wird der Sperrarm 2 in die in Figur 1 gestrichelt dargestellte Blockierstellung 2' verschwenkt. Damit der Benutzer, der dann vor dem Sperrarm 2' steht, das Sperrelement 1 nicht passieren kann, wenn ein zweiter Benutzer mit gültiger Zugangsberechtigung nachkommt, wird nach Detektion einer Person mit dem Personensensor 23 und ohne gültige Lesung das erste Antennenspulenpaar 12, 13 deaktiviert und das zweite Antennenspulenpaar 14, 15 aktiv geschaltet.

Die Zugangsberechtigung einer nachfolgenden Person wird damit nicht erfasst. Stattdessen erfolgt eine nochmalige Prüfung der Zugangsberechtigung der vor dem Sperrarm 2' stehenden Person mit dem Antennenspulenpaar 14, 15. Bei einer gültigen Zugangsberechtigung bei nochmaliger Überprüfung mit dem Antennenspulenpaar 14, 15 wird das Antennenspulenpaar 12, 13 wieder aktiv und das Antennenspulenpaar 14, 15 inaktiv geschaltet und das Sperrelement 1 wieder in die Freigabeposition gedreht.

Gemäß Figur 5 besteht der RFID-Transponder 22 im Wesentlichen aus der Antennen- oder Transponderspule 24 mit dem Mikrochip 21 als Datenträger.

Durch die Leseeinrichtung 20 erzeugen die aktiv geschalteten Antennenspulenpaare 12 und 13 bzw. 14 und 15 ein hochfrequentes Feld. Dabei ist die induktive Kopplung zwischen dem jeweiligen Antennenspulenpaar 12 und 13 bzw. 14 und 15 mit dem Transponder 22 umso stärker, je mehr Feldlinien das Innere 25 der Transponderspule 24 durchsetzen.

Wie in Figur 3 für das aktiv geschaltete Antennenspulenpaar 12 und 13 dargestellt, führt eine gleichphasige Ansteuerung der beiden Antennenspulen 12, 13 durch die Leseeinrichtung 20 zu einer Superposition der Einzelfelder der Antennenspulen 12, 13 an beiden Seiten der Zugangsspur 4 zu Feldlinien 26, die sich größtenteils quer über die Zugangsspur 4 erstrecken.

D.h., wenn der Transponder 22 und damit die Transponderspule 24 längs der Zugangsspur 5, also, wie in Figur 3 dargestellt, parallel zu den Antennenspulen 12, 13 angeordnet ist, wird das Innere 25 des Transponders 24 von der maximalen Anzahl von Feldlinien 26 durchdrungen, so dass die Energieaufnahme des Transponders 22 und damit die Lesezuverlässigkeit ihr Maximum erreicht.

Hingegen weist beim Feldlinienverlauf 26 gemäß Figur 3 die Energieaufnahme und damit die Lesezuverlässigkeit ihr Minimum auf, wenn die Transponderspule 24 quer zur Zugangsrichtung, also senkrecht zu den Antennenspulen 12, 13 angeordnet wäre, da dann keine, jedenfalls nur wenige Feldlinien 26 die Transponderspule 24 durchsetzen.

Im Gegensatz zum gleichphasigen Betriebsmodus führt die Superposition der Einzelfelder der beiden Antennenspulen 12, 13 bei gegenphasigem Betriebsmodus gemäß Figur 4 zu Feldlinien 27, die insbesondere in der Mitte der Zugangsspur 4 zwischen den beiden Antennenspulen 12 und 13 mehr längs der Zugangsspur 4 verlaufen. D.h., wenn die Transponderspule 24 quer zur Zugangsrichtung 5, also parallel zu den Antennenspulen 12, 13 angeordnet ist, wird das Innere 25 der Transponderspule 24 von der maximalen Anzahl von Feldlinien 27 durchsetzt, wodurch die Lesezuverlässigkeit ihr Maximum erreicht.

Erfindungsgemäß werden daher die beiden Antennenspulen 12, 13 zwar gleichzeitig, jedoch abwechselnd entweder gleichphasig oder gegenphasig von der Leseeinrichtung 20 angesteuert.

In der in Figur 6 dargestellten Schaltungsanordnung sind lediglich die beiden Parallelschwingkreise 30, 31 für die beiden in Figur 1 und 2 ersten Antennenspulen 12 und 13 dargestellt, die an den einen Pol 32 des Diodenschalters 33 angeschlossen sind, an dessen anderen Pol 34 die nicht dargestellten Parallelschaltkreise mit den beiden gemäß Figur 1 und 2 zweiten Antennenspulen 14 und 15 angeschlossen sind. Die Schaltung der an den Pol 34 des Schalters 33 angeschlossenen Schwingkreise der beiden Antennenspulen 14 und 15 sind dabei in gleicher Weise ausgebildet wie die in Figur 6 dargestellten an den Pol 32 des Schalters 33 angeschlossenen beiden Parallelschwingkreise 30, 31.

Gemäß Figur 6 ist zwischen der Sende- und Empfangselektronik 29 der Leseeinrichtung 20 und dem Schalter 33 ein Treiber 36 vorgesehen. Der Pol 32 des Schalters 33 ist über einen Kondensator 38 mit dem einen Parallelschwingkreis 30 aus der Antennenspule 12 (Induktivität) und dem parallel geschalteten Kondensator 39 (Kapazität) verbunden. Demgegenüber ist der Kondensator 40 des zweiten Parallelschwingkreises 31, der aus der Antennenspule 13 und dem Kondensator 41 besteht, mit dem Pol 32 des Schalters 33 über einen 180 °-Phasenschalter 44 verbindbar.

Der Phasenschalter 44 besteht seinerseits aus einem Diodenschalter 45, dessen einer Pol 46 direkt mit dem Parallelschwingkreis 31 verbunden ist, während der andere Pol 47 über einen nicht dargestellten Trafo mit zwei Spulen zur 180 °-Phasenumkehr zu dem Parallelschwingkreis 31 führt. Durch Umschalten des Diodenschalters 45 kann damit der gleichphasige Betriebsmodus der beiden Schwingkreise 30, 31 in den gegenphasigen Betriebsmodus übergeführt werden.

Der Diodenschalter 45 wird im Betrieb der Zugangskontrollvorrichtung von der Sende/Empfangselektronik 29 über die gestrichelt dargestellte Steuerleitung 51 angesteuert und dadurch zwischen den Polen 46, 47 ständig hin- und hergeschaltet. Wenn die Sende/Empfangselektronik 29 einen Transponder 22 detektiert, wird der Betriebsmodus, bei dem der Transponder 22 detektiert worden ist, solange aufrechterhalten, bis die Lesetransaktion abgeschlossen, also der Datenaustausch zwischen Sende/Empfangselektronik 29 und Transponder 22 abgewickelt worden ist.

D.h., wenn der Transponder 22 gemäß Figur 3 z.B. in einer Seitentasche getragen und die Transponderspule 24 damit in Zugangsrichtung 5, also parallel zu den Antennenspulen 12, 13 ausgerichtet ist, und der Transponder 22 daher im gleichphasigen Betriebsmodus detektiert wird, also wenn der Diodenschalter 45 auf den Pol 46 geschaltet ist, bleibt dieser Betriebsmodus aufrechterhalten, bis die Lesetransaktion abgeschlossen ist, während, wenn der Transponder 22 mit der Transponderspule 24 gemäß Figur 4 z.B. in einer Brusttasche getragen und der Transponder 22 daher im gegenphasigen Betriebsmodus, also bei auf den Pol 47 geschaltetem Diodenschalter 45 detektiert wird, der gegenphasige Betriebsmodus beim Datenaustausch aufrechterhalten wird. Nach dem Ende der Transaktion wird über die Steuerleitung 51 das Hin- und Herschalten des Diodenschalters 45 fortgesetzt.

Um zu verhindern, dass sich die mit einem geringen Abstand von beispielweise weniger als einem halben Meter hintereinander angeordneten Antennenspulen 12, 13 und 14, 15 an der einen bzw. anderen Seite der Zugangsspur 4 durch induktive Kopplung beeinflussen, wenn das eine Antennenspulenpaar 12, 13 bzw. 14, 15 von der Sende/Empfangselektronik 29 der Leseeinrichtung 20 zum Auslesen der Daten aus dem Transponder 22 angesteuert wird, während das andere Antennenspulenpaar 14, 15 bzw. 12, 13 deaktiviert, also nicht zum Auslesen von Daten aus dem Transponder 22 angesteuert ist, wird erfindungsgemäß der nicht angesteuerte Schwingkreis verstimmt oder kurzgeschlossen.

Wie für die beiden Schwingkreise 30, 31 für das erste, also in Zugangsrichtung 5 vordere Antennenpaar 12, 13 in Figur 6 dargestellt, ist dazu jeder Schwingkreis 30, 31 mit einer Verstimm- oder Kurzschlusselektronik 52, 53 versehen. Die Verstimm- oder Kurzschlusselektronik 52, 53 weist dazu vorzugsweise einen (nicht dargestellten) Diodenschalter auf. Die Verstimm- oder Kurzschlusselektronik 52, 53 wird mit einer Niedervolt-Gleichspannung von z.B. 5 V mit Strom versorgt, die zugleich das Schaltsignal für den Diodenschalter der Verstimm- oder Kurzschlusselektronik 53, 53 liefert.

Um die Verstimm- oder Kurzschlusselektronik 52, 53 von der hochfrequenten Wechselspannung des Schwingkreises 30, 31 zu entkoppeln, ist eine Spule 54, 55 in einer Leitung 56, 57 vorgesehen, die vor dem Eingang zum Schwingkreis 30, 31 vor dem Kondensator 38, 39 und an die Verstimm- oder Kurzschlusselektronik 52, 53 angeschlossen ist.

Zum Ansteuern der Verstimm- oder Kurzschlusselektronik 52, 53 der beiden Schwingkreise 30, 31 ist ein beispielweise elektronischer Schalter 58 vorgesehen, der an die 5 V-Gleichspannung zur Stromversorgung der Sende/Empfangselektronik 29 angeschlossen ist.

Die Gleichspannung zur Stromversorgung und Ansteuerung der Verstimm- oder Kurzschlusselektronik kann damit über das gleiche Hochfrequenzkabel 16, 17 der Verstimm- oder Kurzschlusselektronik 52, 53 der Schwingkreise 30, 31 zugeführt werden, welches den Treiber 36 mit den Schwingkreisen 30, 31 verbindet.

Während der Schalter 58 durch die Steuerleitung 65 von der Sende/Empfangselektronik 29 angesteuert wird, wird der Schalter 33, der die Leseeinrichtung mit den beiden anderen Antennenspulen 14, 15 verbindet, durch die Steuerleitung 66 von der Sende/Empfangselektronik 29 angesteuert. Die nicht dargestellten Schwingkreise mit den Antennenspulen 14, 15 sind dabei mit der gleichen Verstimm- oder Kurzschlusselektronik versehen, wie die Schwingkreise 30, 31, einschließlich der Spulen 54, 55 in den Leitungen 56, 57.

Die in Figur 6 gestrichelt dargestellte Leseeinrichtung 20 kann durch eine Leiterplatte gebildet sein, die alle darin angeordneten Komponenten aufnimmt.

In der Zeichnung ist nur eine Leseeinrichtung 20 für beide einander gegenüberliegende Antennen 12 bis 15 beiderseits der Zugangsspur 4 dargestellt, es kann jedoch auch für jedes Antennenspulenpaar 12 und 13 bzw. 14 und 15 jeweils eine Leseeinrichtung vorgesehen sein.

## Patentansprüche

1. Zugangskontrollsystem mit wenigstens zwei an einer Zugangsspur (4) hintereinander angeordneten, an eine Leseeinrichtung (20) angeschlossenen Antennenspulen (12, 13 und 14, 15), die mit einer Kapazität (40, 41) einen Schwingkreis (30, 31) bilden, wobei entweder der eine Schwingkreis (30, 31) mit der in Zugangsrichtung (5) ersten Antennenspule (12, 13) oder der andere Schwingkreis mit der zweiten Antennenspule (14, 15) von der Leseeinrichtung (20) angesteuert wird, um von einem von einem Benutzer getragenen Transponder (22), der eine mit den Antennenspulen (12 bis 15) koppelbare Transponderspule (24) aufweist, Daten für eine Zugangsberechtigung auszulesen, **dadurch gekennzeichnet, dass** der nicht angesteuerte Schwingkreis (30, 31) verstimmt oder kurzgeschlossen ist.

2. Zugangskontrollsystem nach Anspruch 1, **dadurch gekennzeichnet, dass** ein Sperrsystem vorgesehen ist, das in seiner Grundstellung den Zugang (4) freigibt und ihn nur bei ungültiger Lesung einer Zugangsberechtigung und Detektion einer Person mit einem Personensensor (23) blockiert, wobei das Sperrelement von der Leseeinrichtung (20) in Abhängigkeit einer gültigen oder ungültigen Lesung einer Zugangsberechtigung mit der ersten Antennenspule (12, 13) oder der zweiten Antennenspule (14, 15) betätigbar ist.

3. Zugangskontrollsystem nach Anspruch 1 oder 2, **dadurch gekennzeichnet, dass** der ersten und/oder der zweiten Antennenspule (12, 14) auf der anderen Seite der Zugangsspur (4) eine Antennenspule (13, 15) zur Bildung eines zweiten Schwingkreises gegenüberliegt, wobei die einander gegenüberliegenden Antennenspulen (12, 13 und 14, 15) ein Antennenspulenpaar bilden, die Antennenspulen (12, 13 bzw. 14, 15) jedes Paares gleichzeitig, jedoch abwechselnd in einem gleichphasigen oder in einem gegenphasigen Betriebsmodus von der Leseeinrichtung (20) angesteuert werden und zum Auslesen des von dem Benutzer getragenen Transponders (22) derjenige Betriebsmodus, bei dem der Transponder (22) detektiert wird, so lange aufrechterhalten wird, bis die Lesetransaktion abgeschlossen ist.

4. Zugangskontrollsystem nach einem der vorstehenden Ansprüche, **dadurch gekennzeichnet, dass** eine Verstimm- oder Kurzschlusselektronik (52, 53) zum Verstimmen oder Kurzschließen des jeweiligen Schwingkreises (30, 31), der von der Leseeinrichtung (20) nicht zum Auslesen von Daten aus dem Transponder (22) angesteuert wird, vorgesehen ist.

5. Zugangskontrollsystem nach Anspruch 4, **dadurch gekennzeichnet, dass** die Verstimm- oder Kurzschlusselektronik (52, 53) wenigstens einen Diodenschalter aufweist.

6. Zugangskontrollsystem nach Anspruch 4 oder 5, **dadurch gekennzeichnet, dass** zur Stromversorgung und als Schaltsignal für die Verstimm- oder Kurzschlusselektronik (52, 53) bzw. für den Diodenschalter eine Niedervolt-Gleichspannung verwendet wird.

7. Zugangskontrollsystem nach Anspruch 6, **dadurch gekennzeichnet, dass** die Niedervolt-Gleichspannung der Stromversorgung der Leseeinrichtung (20) entnommen wird.

8. Zugangskontrollsystem nach Anspruch 6 oder 7, **dadurch gekennzeichnet, dass** die Kabel (16 bis 19), die die Leseeinrichtung (20) mit den Schwingkreisen (30, 31) mit den Antennenspulen (12 bis 15) verbinden, zugleich zur Stromversorgung und zur Übertragung der Schaltsignale für die Verstimm- oder Kurzschlusselektronik (52, 53) verwendet werden.

9. Zugangskontrollsystem nach einem der Ansprüche 4 bis 8, **dadurch gekennzeichnet, dass** der Verstimm- oder Kurzschlusselektronik eine Entkopplungseinrichtung zum Entkoppeln der Wechselspannung des Schwingkreises (30, 31) vorgeschaltet ist.

10. Zugangskontrollsystem nach Anspruch 9,**dadurch gekennzeichnet, dass** die Entkopplungseinrichtung durch eine Spule (54, 55) gebildet wird.

11. Zugangskontrollsystem nach Anspruch 1, **dadurch gekennzeichnet, dass** zum Ansteuern der Verstimm- oder Kurzschlusselektronik (52, 53) der Schwingkreise (30, 31) ein Schalter (58) verwendet wird.

## Geänderte Patentansprüche

### Geänderte Patentansprüche gemäss Regel 137(2) EPÜ.

**1.** Zugangskontrollsystem mit wenigstens zwei an einer Zugangsspur (4) hintereinander angeordneten, an eine Leseeinrichtung (20) angeschlossenen Antennenspulen (12, 13 und 14, 15), die mit einer Kapazität (39, 41) einen Schwingkreis (30, 31) bilden, wobei entweder der eine Schwingkreis (30, 31) mit der in Zugangsrichtung (5) ersten Antennenspule (12, 13) oder der andere Schwingkreis mit der zweiten Antennenspule (14, 15) von der Leseeinrichtung (20) angesteuert wird, um von einem von einem Benutzer getragenen Transponder (22), der eine mit den Antennenspulen (12 bis 15) koppelbare Transponderspule (24) aufweist, Daten für eine Zugangsberechtigung auszulesen, **dadurch gekennzeichnet, dass** der nicht angesteuerte Schwingkreis (30, 31) mit einer Verstimm- oder Kurzschlusselektronik (52, 53) verstimmt oder kurzgeschlossen wird, wobei zur Stromversorgung und als Schaltsignal für die Verstimm-oder Kurzschlusselektronik (52, 53) eine Niedervolt-Gleichspannung verwendet wird, die der Stromversorgung der Leseeinrichtung entnommen wird und die Kabel (16 bis 19), die die Leseeinrichtung (20) mit den Schwingkreisen (30, 31) mit den Antennenspulen (12 bis 15) verbinden, zugleich zur Stromversorgung und zur Übertragung der Schaltsignale für die Verstimm- oder Kurzschlusselekronik (52, 53) vorgesehen sind.

**2.** Zugangskontrollsystem nach Anspruch 1, **dadurch gekennzeichnet, dass** ein Sperrsystem vorgesehen ist, das in seiner Grundstellung den Zugang (4) freigibt und ihn nur bei ungültiger Lesung einer Zugangsberechtigung und Detektion einer Person mit einem Personensensor (23) blockiert, wobei das Sperrelement von der Leseeinrichtung (20) in Abhängigkeit einer gültigen oder ungültigen Lesung einer Zugangsberechtigung mit der ersten Antennenspule (12, 13) oder der zweiten Antennenspule (14, 15) betätigbar ist.

**3.** Zugangskontrollsystem nach Anspruch 1 oder 2, **dadurch gekennzeichnet, dass** der ersten und/oder der zweiten Antennenspule (12, 14) auf der anderen Seite der Zugangsspur (4) eine Antennenspule (13, 15) zur Bildung eines zweiten Schwingkreises gegenüberliegt, wobei die einander gegenüberliegenden Antennenspulen (12, 13 und 14, 15) ein Antennenspulenpaar bilden, die Antennenspulen (12, 13 bzw. 14, 15) jedes Paares gleichzeitig, jedoch abwechselnd in einem gleichphasigen oder in einem gegenphasigen Betriebsmodus von der Leseeinrichtung (20) angesteuert werden und zum Auslesen des von dem Benutzer getragenen Transponders (22) derjenige Betriebsmodus, bei dem der Transponder (22) detektiert wird, so lange aufrechterhalten wird, bis die Lesetransaktion abgeschlossen ist.

**4.** Zugangskontrollsystem nach Anspruch 1, **dadurch gekennzeichnet, dass** die Verstimm- oder Kurzschlusselektronik (52, 53) wenigstens einen Diodenschalter aufweist.

**5.** Zugangskontrollsystem nach Anspruch 1, **dadurch gekennzeichnet, dass** der Verstimm- oder Kurzschlusselektronik eine Entkopplungseinrichtung zum Entkoppeln der Wechselspannung des Schwingkreises (30, 31) vorgeschaltet ist.

**6.** Zugangskontrollsystem nach Anspruch 5,**dadurch gekennzeichnet, dass** die Entkopplungseinrichtung durch eine Spule (54, 55) gebildet wird.

**7.** Zugangskontrollsystem nach Anspruch 1, **dadurch gekennzeichnet, dass** zum Ansteuern der Verstimm- oder Kurzschlusselektronik (52, 53) der Schwingkreise (30, 31) ein Schalter (58) verwendet wird.
